# EUROPÄISCHE PATENTSCHRIFT

(11) **EP 1 162 045 B1**
(45) Veröffentlichungstag und Bekanntmachung des Hinweises auf die Patenterteilung: **14.03.2007**
(21) Anmeldenummer: 01111311.5
(22) Anmeldetag: 09.05.2001
(51) Int. Cl.: F16C 13/00, D21G 1/02

(54) **Walzenvorrichtung**
Roller device
Dispositif à rouleau

(30) Priorität: 30.05.2000 DE 10026883; 27.09.2000 DE 10048984; 28.11.2000 DE 20020157 U
(43) Veröffentlichungstag der Anmeldung: 12.12.2001
(73) Patentinhaber: Andritz Küsters GmbH & Co. KG, 47805 Krefeld (DE)
(72) Erfinder: Kubik, Klaus, 47918 Tönisvorst (DE)
(74) Vertreter: Kluin, Jörg-Eden

(56) Entgegenhaltungen:
- DE-A- 1 811 690
- DE-C- 4 442 571
- DE-C- 19 813 121
- DE-U- 29 614 264

## Beschreibung

Die Erfindung bezieht sich auf eine Walzenvorrichtung der dem Oberbegriff des Anspruchs 1 entsprechenden Art.

Ein Beispiel einer solchen Walzenvorrichtung mit einer beheizten Walze ist aus der EP 813 632 bekannt. In der zylindrischen Ausnehmung des Walzenkörpers ist eine Heizeinrichtung angeordnet, die zur Erhöhung der Temperatur am arbeitenden Walzenumfang und damit zur direkten Beeinflussung der mit der Walze durchgeführten Behandlung einer Warenbahn dient. Das Ziel bei der bekannten beheizten Walze besteht darin, eine möglichst gleichmäßige Beheizung quer zur Warenbahn, d.h. über die Länge der Walze, zu erzielen. Aus diesem Grund sind im Walzenkörper radial außerhalb der Ausnehmung achsparallele sogenannte "periphere" Bohrungen vorgesehen, die teilweise mit Wärmeträgerflüssigkeit gefüllt und an den Enden durch Ringkammern miteinander verbunden sind. Die an kälteren Stellen der peripheren Bohrungen kondensierende Wärmeträgerflüssigkeit vergleichmäßigt die Temperatur in dem Kanalsystem. Die Beheizung erfolgt, um die Walze auf eine bestimmte von der Umgebungstemperatur abweichende Temperatur zu bringen, die für die durchzuführende Behandlung zweckmäßig ist.

Eine ähnliche Walze ist aus der DE 1 811 690 A bekannt, bei der zur Verbesserung des Rundlaufs die Temperierung in einem enge Umfangswinkelbereich erfolgt.

Der Ausdruck "Walzenvorrichtung" ist gewählt worden um darzutun, daß es sich nicht um eine "Walzvorrichtung" handeln muß, bei welcher ein bandförmiges Produkt im Zusammenwirken mit einer Gegenwalze, also zwischen zwei Walzen, behandelt wird. Es gibt nämlich auch Fälle, in denen nur eine Walze mit einem feststehenden Gegenelement zusammenarbeitet, wie es zum Beispiel in einer Anlage zur Ultraschall-Bearbeitung einer Warenbahn der Fall ist, wobei eine umlaufende Walze mit einer radial gegen diese gerichteten Sonotrode zusammenwirkt und die zu behandelnde, zum Beispiel zu verfestigende oder zu schneidende Warenbahn zwischen beiden hindurchgeleitet wird. Ein Beispiel für eine solche Anordnung ist in der DE 198 13 121 C1 beschrieben.

Bei Ultraschall-Behandlungsanlagen werden besondere Anforderungen an die Rundlaufgenauigkeit der Walze gestellt. Dies gilt besonders für die Ultraschall-Verfestigung von Vliesen aus thermoplastischen Fasern. Hierbei wirkt der Ultraschall-Erzeuger über die feststehende Sonotrode, d.h. den Übertrager des Ultraschalls, radial gegen die das Verfestigungsmuster in Gestalt einer Oberflächengravur tragende die sogenannte Gegenwalze bildende Walze. An den erhabenen Stellen der Oberflächengravur ist die Übertragung der Ultraschall-Energie auf das Vlies besonders intensiv, so daß hier eine bevorzugte Temperaturerhöhung und eine bevorzugte Verschmelzung der Fasern eintreten und auf diese Weise eine mustergemäße punktweise oder linienweise Verbindung der einzelnen Fäden oder Fasern des Vlieses erzielt wird, die die Vlieslage in sich verfestigt.

Geringste Schwankungen des Abstandes zwischen der feststehenden Stirnfläche der Sonotrode und dem Umfang der umlaufenden Gegenwalze führen zu einer unterschiedlichen Verfestigungswirkung. Ein solches Vlies weist im Rhythmus des Umlaufs der Gegenwalze variierende Eigenschaften, zum Beispiel einen variierenden Griff auf, der sofort feststellbar ist und unbedingt vermieden werden muß.

Es ist bei den heutigen Möglichkeiten der spanabhebenden Bearbeitung von Walzen, die als Gegenwalze in einer solchen Verfestigungsanlage in Betracht kommen, durchführbar, bei Walzenlängen von 2 bis 3 m eine Rundlaufgenauigkeit von 5 µm einzuhalten. Diese Genauigkeit reicht jedoch für einen gleichmäßigen Verfestigungsprozeß manchmal schon nicht aus, sondem kann Anlaß zu den erwähnten Eigenschaftsschwankungen sein. Überdies pflegt sich eine einmal vorhandene Unregelmäßigkeit im Betrieb zu verstärken. Wenn nämlich der "Schlag" an der Sonotrode vorbeikommt, d.h. der Bereich mit dem um die Schlaghöhe vergrößerten Radius, so steigt an dieser Umfangsstelle der Walze die auf das Vlies übertragene Leistung an und führt dort zu einem höheren Wärmeeintrag in das Vlies, was einerseits dessen besagte ungleichmäßige Verfestigung, aber andererseits auch eine Erhöhung der in diesem Umfangsbereich auf die Walze übertragenen Wärmemenge bedeutet. Dies wiederum führt zu einer bevorzugten Temperaturerhöhung der Walze in der durch die Lage des Schlages gegebenen Richtung und damit im Sinne einer Vergrößerung der Rundlaufungenauigkeit. Die Schwankung der Verfestigungswirkung nimmt so im Laufe des Betriebes von selbst weiter zu.

Rundlaufungenauigkeiten in der angegebenen Größenordnung von 5 µm sind nicht nur auf von Anfang an vorhandene Toleranzen zurückzuführen. Solche Rundlaufungenauigkeiten können auch später entstehen, zum Beispiel wenn die Walze in der Fabrikhalle durch irgendeine Ursache von außen eine ungleichmäßige Temperatur erhält. Auch der bloße Einfluß des Walzengewichts bei stehender Walze kann durch dadurch initiierte geringfügige Gefügeänderungen schon zu Ungenauigkeiten der genannten Größenordnung Anlaß sein, die sich unter dem Einfluß der Ultraschall-Energieübertragung verstärken und aufschaukeln.

Die geschilderten Unregelmäßigkeiten liegen in Umfangsrichtung der Walze vor, nicht in Längsrichtung. Soweit es sich um Temperaturunterschiede über die Länge handelt, können diese beispielsweise mit der Anordnung nach der EP 813 632 bekämpft werden, die jedoch bei Unterschieden in Umfangsrichtung nichts ausrichten kann.

Die Erfindung hingegen befaßt sich nur mit solchen Abweichungen, die zu einer Verbiegung des Walzenkörpers in einer durch die Achse gehenden Ebene führen, indem der Walzenkörper auf einer Längsseite eine etwas höhere Temperatur als auf der gegenüberliegenden Längsseite aufweist - er verbiegt sich dann wie ein Bimetallstreifen, indem sich die eine Längsseite dehnt, die andere aber nicht.

Der Effekt ist aber nicht daran gebunden, daß auf den einander gegenüberliegenden Längsseiten schon anfänglich unterschiedliche Temperaturen herrschen. Ausgangssituation für die die Rundlaufungenauigkeit bedingende Biegung kann, wie bereits erwähnt, auch eine Bearbeitungsungenauigkeit oder eine Gefügeveränderung sein.

Der bei der Erfindung zu bekämpfende Effekt muß auch von der Frage getrennt gehalten werden, ob es sich um eine beheizte Walze handelt oder nicht. Das erfindungsgemäße Problem kann sowohl bei einer beheizten Walze gegeben sein - dann überlagern sich die gegebenenfalls vorhandenen zu der Biegung führenden geringfügigen Temperaturunterschiede in Umfangsrichtung der Allgemein-Beheizung der Walze - als auch bei gänzlich unbeheizten Walzen - dann kommen sie durch den ungleichmäßigen Energieeintrag z.B. einer Ultraschallanlage beim Umlauf zustande.

Ausgehend von den geschilderten Problemen bei der Ultraschall-Verfestigung von Vliesen liegt der Erfindung die Aufgabe zugrunde, eine möglichst große Rundlaufgenauigkeit einer Walze im Betrieb einzuhalten.

Diese Aufgabe wird durch die in Anspruch 1 wiedergegebene Erfindung gelöst.

Die Ausgleichsmittel können grundsätzlich Heizmittel oder Kühlmittel sein. Ihre Wirkung, d.h. ihre Wärmeübertragung auf die Walze, soll bevorzugt in einer bestimmten Richtung, in Umfangsrichtung gesehen, erfolgen, so daß also die umlaufende Walze gezielt ungleichmäßig beheizt oder gekühlt wird, aber nicht über ihre Länge, sondern eben in Umfangsrichtung. Durch diese in nur einer Richtung bzw. in einer im wesentlichen ebenen oder einen engen Umfangswinkel einhaltenden Zone erfolgende Wärmeübertragung kann der unerwünschten Längsbiegung der Walze und der darauf beruhenden Rundlaufungenauigkeit über die entsprechend erzielte thermische Dehnung entgegengewirkt werden. Der Bimetalleffekt soll aufgehoben werden. Wenn also ein bestimmter "Schlag" besteht, so soll erfindungsgemäß dessen Auswirkung am Umfang der Walze durch Beheizung der Gegenseite bzw. durch Kühlung der gleichen Seite vermindert werden. Die hierfür herbeizuführenden Temperaturunterschiede betragen nur wenige Grad und haben nichts mit den für eine normale Beheizung der Walze benötigten wesentlich größeren Temperaturunterschieden zu tun.

Das Anwendungsgebiet einer solchen Walze mit sehr hohen Anforderungen an die Rundlaufgenauigkeit ist die Verwendung in Anlagen zur Ultraschall-Behandlung von Bahnen mittels einer radial gegen den Walzenumfang gerichteten Sonotrode, wobei die Temperiermittel zugleich die Ausgleichsmittel sind, d.h. es müssen die Ausgleichsmittel kein von den Temperiermitteln getrenntes System bilden.

Im einzelnen kann die Gestaltung nach Anspruch 2 getroffen sein, wobei insbesondere die Ausbildung nach Anspruch 3 in Betracht kommt.

Die Ausgleichsmittel können länglich-stabförmig ausgebildet und achsparallel über die Länge der Walze durchgehend und über den Umfang gleichmäßig verteilt angeordnet sein (Anspruch 4).

Sie sind also ähnlich gestaltet, wie es bei den für die Gesamt-Beheizung oder -Kühlung zuständigen Temperiermitteln der Fall sein kann.

Die Ausgleichsmittel können nach den Ansprüchen 5 oder 6 ausgebildet sein, wobei die Temperierelemente Heizelemente oder Kühlelemente sein können.

Eine erste konstruktive Gestaltung der Walzenvorrichtung ist Gegenstand des Anspruchs 7 und sieht vor, daß der Walzenkörper im Innern zumindest über einen wesentlichen Teil der Länge des arbeitenden Walzenumfangs eine zum Walzenumfang koaxiale zylindrische Ausnehmung aufweist und die Ausgleichsmittel im Innern der Ausnehmung angeordnet sind.

Dies kann gemäß Anspruch 8 so realisiert werden, daß die Ausgleichsmittel im Innern der Ausnehmung mitumlaufend ausgebildet sind.

Sie können aber gemäß Anspruch 9 auch im Innern der Ausnehmung undrehbar angeordnet und im Rhythmus des Umlaufs der Walze aktivierbar und deaktivierbar sein. Jedesmal, wenn die "Zielzone" vorbeikommt, wird also das Temperiermittel eingeschaltet und gleich danach wieder abgeschaltet. Auch auf diese Weise kann eine bevorzugte Beheizung oder Kühlung einer in Umfangsrichtung begrenzten Zone der Walze herbeigeführt werden.

Gemäß Anspruch 10 können am Umfang der Ausnehmung mehrere stabförmige, achsparallele, über den Umfang verteilte, mitumlaufende, separat ansteuerbare Temperierelemente vorgesehen und der Walze eine Einrichtung zur Bestimmung der Winkellage eines Rundlauffehlers zugeordnet und mit einer Steuereinrichtung derart wirkungsverbunden sein, daß durch separate Ansteuerung nach Lage des Rundlauffehlers ausgewählter Temperierelemente dem Rundlauffehler entgegenwirkbar ist.

Konstruktiv kann bei dieser Ausführungsform die Walze gemäß Anspruch 11 mit einem zylindrischen Kern versehen sein, der an seinem Außenumfang achsparallele Nuten für die Temperierelemente aufweist.

Mit der Walze kann gemäß Anspruch 12 ein Schleifringsatz drehverbunden sein, mittels dessen den einzelnen Temperierelementen jeweils separat elektrische Energie zuführbar ist.

Durch eine entsprechende Dosierung der einem einzelnen Temperierelement zugeführten elektrischen Energie kann ein einzelnes Temperierelement bevorzugt beaufschlagt werden, um der Rundlaufungenauigkeit entgegenzuwirken.

In einer ersten in Anspruch 13 wiedergegebenen Variante können die elektrischen Temperierelemente mittels der zugeführten elektrischen Energie direkt beaufschlagbar sein. In diesem Fall handelt es sich also zum Beispiel um elektrische Heizstäbe oder mittels Peltier-Elementen betriebene Kühlstäbe.

Bei der Variante nach Anspruch 14 wird die separate Zuführung der elektrischen Energie mit den Kanälen des Anspruchs 7 kombiniert, indem mittels der elektrischen Energie in den Kanälen angeordnete Drosseleinrichtungen betätigbar sind, die den Durchflußquerschnitt für ein Wärmeträgermedium und damit die Wärmeübertragungsleistung beeinflussen.

Bei der vorstehend beschriebenen Ausführungsform sind über den Umfang der Walze verteilt mehrere separate stabförmige Temperierelemente vorhanden.

Bei der Ausführungsform nach Anspruch 15 jedoch ist die Ausnehmung von einem das Temperiermittel (welches also nicht unbedingt ein starrer Gegenstand sein muß) bildenden Wärmeträgermedium durchströmt und die Strömung über den Querschnitt der Ausnehmung einseitig verungleichmäßigt, was ebenfalls eine in Umfangsrichtung gezielt ungleichmäßige Wärmeübertragung zur Folge hat und in diesem Fall das Ausgleichsmittel bildet. Die Verungleichmäßigung der Strömung reicht zur Erzielung des erfindungsgemäßen Effektes aus, weil die benötigten Temperaturunterschiede nur wenige Grad betragen.

Die Verungleichmäßigung kann durch einen in der Ausnehmung angeordneten stabförmigen, zu deren Achse parallelen mitumlaufenden Verdrängungskörper bewerkstelligt werden, der im Querschnitt der Ausnehmung aus der Mitte heraus parallel zu sich selbst verlagerbar ist (Anspruch 16). Die Lage des Verdrängungskörpers in der Ausnehmung kann also in Umfangsrichtung der Lage des Schlages entsprechend eingestellt und/oder in radialer Richtung justiert werden, etwa um die Einwirkungsstärke zu beeinflussen.

Dies kann konstruktiv gemäß Anspruch 17 so realisiert werden, daß der stabförmige Verdrängungskörper an seinen beiden Enden in hinsichtlich Winkellage und gegebenenfalls Exzentrizität einstellbaren mitumlaufenden Exzenteranordnungen geführt ist.

Die stabförmigen Temperierelemente können schließlich nach Anspruch 18 durch ein von einem fluiden Wärmeträgermedium durchströmtes, zur Achse der Walze paralleles Spritzrohr mit einer einseitigen, linearen, sich längs des Spritzrohrs erstreckenden Austrittszone gebildet sein, durch die Wärmeträgermedium im wesentlichen in einer durch die Achse gehenden Ebene aus dem Innern des Spritzrohrs gegen den Innenumfang der Ausnehmung des Walzenkörpers bzw. den Außenumfang desselben ausspritzbar ist.

Die Austrittszone kann gemäß Anspruch 19 durch eine Loch-, Düsen- oder zur Achse des Spritzrohrs parallele Schlitzreihe gebildet sein.

Gemäß Anspruch 20 ist das Spritzrohr, wenn es in der Ausnehmung angeordnet ist, zweckmäßig im Querschnitt der Ausnehmung verlagerbar und um seine Achse drehbar ausgebildet, um mit dem ausgespritzten Wärmeträgermedium eine durch die Lage des Schlages bestimmte Stelle des Innenumfangs der Ausnehmung treffen zu können.

Durch eine Blende nach Anspruch 21 kann die Einwirkung des als Ausgleichselement dienenden Temperierelements aktivierbar und deaktivierbar sein.

Bei den vorstehend beschriebenen Ausführungsformen sind die Ausgleichsmittel in einer Ausnehmung des Walzenkörpers, d.h. in dessen Innerem, vorgesehen. Es ist aber auch möglich, die Ausgleichsmittel außerhalb des Umfangs des Walzenkörpers diesem benachbart anzuordnen und sie im Rhythmus des Umlaufs der Walze zu aktivieren und zu deaktivieren (Anspruch 22).

Die benötigte thermische Beeinflussung des Walzenkörpers geschieht hierbei nicht von innen, sondern von außen. Die Aktivierung bzw. Deaktivierung bei jedem Umlauf oder nach einigen Umläufen ist notwendig, damit die thermische Beeinflussung auf eine bestimmte einen geringen Umfangswinkel einnehmende Zone beschränkt bleibt, die die Gegenwirkung zu dem in der Walze vorhandenen Schlag herbeiführen soll.

Gemäß Anspruch 23 kann eine außerhalb der Walze angeordnete Temperiereinrichtung mindestens ein feststehendes längliches achsparalleles sich im wesentlichen über die Länge des Walzenkörpers erstreckendes Temperierelement sein.

In der Zeichnung sind Ausführungsbeispiele der Erfindung schematisch dargestellt.
- Fig. 1: zeigt einen Längsschnitt durch eine erste Ausführungsform einer Walze;
- Fig. 2: zeigt einen Querschnitt etwa nach der Linie II-II in Fig. 1;
- Fig. 3: zeigt einen Längsschnitt durch eine zweite Ausführungsform einer erfindungsgemäßen Walze;
- Fig. 4: zeigt einen Querschnitt etwa nach der Linie IV-IV in Fig. 3;
- Fig. 5: zeigt einen Teilquerschnitt durch eine Walze mit einem in der Ausnehmung des Walzenkörpers angeordneten Spritzrohr;
- Fig. 6: zeigt einen entsprechenden Teilquerschnitt mit einem rohrförmigen einseitig angeordneten Verdrängungskörper;
- Fig. 7: zeigt eine Seitenansicht einer Ultraschall-Verfestigungsanlage für thermoplastische Vliese mit zwei von außen gegen den Außenumfang der Walze wirkenden stabförmigen Temperierelementen;
- Fig. 8: zeigt eine Seitenansicht einer Ultraschall-Vliesverfestigungsanlage;
- Fig. 9: zeigt einen durch die Achse gehenden Längsschnitt durch eine Walze zur Erläuterung des Prinzips der Erfindung.

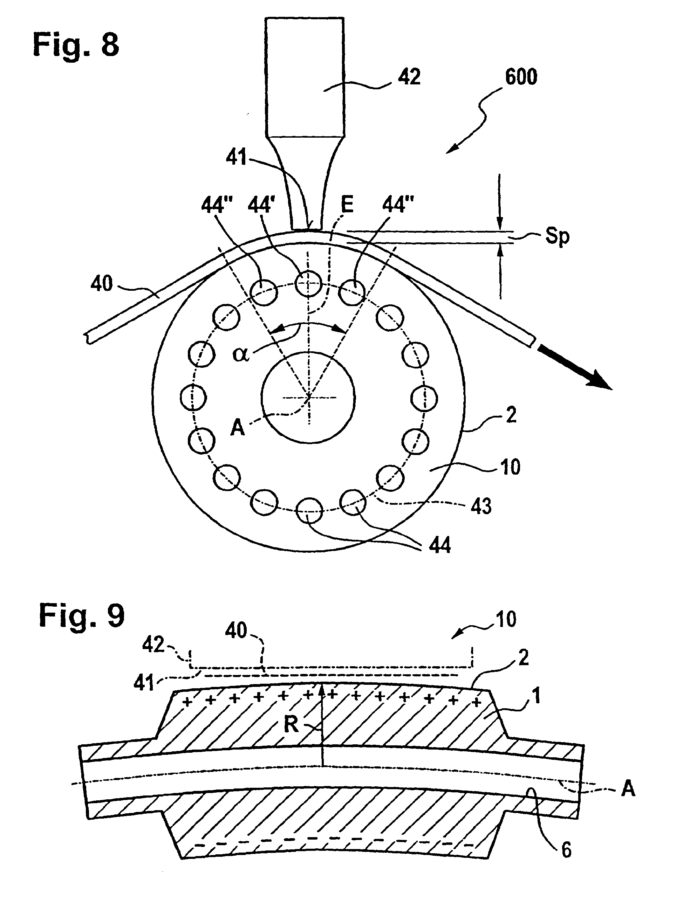

Das Prinzip der Erfindung wird anhand der schematischen Darstellung der Fig. 9 erklärt. Die als Ganzes mit 10 bezeichnete Walze umfaßt einen dickwandigen Walzenkörper 1 mit einer durchgehenden zentralen Längsbohrung 6. Der Walzenkörper 1 kann eine Länge von 2 bis 3 m bei einem Durchmesser von 30 bis 40 cm aufweisen. Nach dem heutigen Stand der Technik erlaubt die maschinelle Bearbeitungsgenauigkeit Toleranzen in der Größenordnung von etwa 5 µm. In dem in Fig. 9 schematisch wiedergegebenen Ausführungsbeispiel ist die Walze 10 die Gegenwalze einer Ultraschall-Bearbeitungsanlage, bei der die Ultraschalleinwirkung von radial zu dem Walzenkörper 1 angeordneten Sonotroden 42 ausgeht, die mit ihrer Stirnfläche 41 der Walzenumfangsfläche 2 dicht gegenüberstehen, wobei die zu bearbeitende Bahn 40, zum Beispiel eine Bahn aus einem thermoplastischen Vlies zwischen der Stirnfläche 41 und der Umfangsfläche 2 hindurchgeleitet wird.

Es sei unterstellt, daß der Walzenkörper 1 aus irgendeinem Grunde einen leichten Anfangsschlag aufweist, der im Rahmen der Toleranz von 5 µm liegen kann. Dieser Schlag kann von der Bearbeitung herrühren, aber auch später entstanden sein, zum Beispiel durch geringfügige Temperaturunterschiede oder durch nachträglich eingetretene Gefügeänderungen, aufgrund deren sich der Walzenkörper 1 etwas verzieht.

Durch diesen Anfangsschlag nähert sich bei jeder Umdrehung der Walze 10 die Walzenumfangsfläche 2 der Stirnfläche 41 der Sonotrode 42 etwas mehr an und entfernt sich dann wieder von der Stirnfläche 41. In der Phase der größten Annäherung erhöht sich die Übertragung der Ultraschall-Energie auf die Warenbahn 40 und auch auf den Walzenkörper 1 deutlich. Diese Übertragung ist stark von dem Abstand zwischen der Stirnfläche 41 und der Walzenumfangsfläche 2 abhängig.

Wenn also die Walze 10 zu irgendeinem Zeitpunkt einen geringfügigen Schlag gemäß Fig. 9 nach oben aufweist, wird die Übertragung der Ultraschall-Energie bevorzugt in dieser Phase erfolgen, so daß sich die den Anfangsschlag aufweisende Oberseite der Walze bevorzugt erwärmt und thermisch ausdehnt, was durch die Reihe der kleinen Plus-Zeichen am oberen Rand des Querschnitts angedeutet sein soll. Die Unterseite ist von diesem Effekt nicht betroffen, so daß die Walze als Ganze wie ein Bimetallstreifen reagiert und sich durchbiegt, was in Fig. 9 stark übertrieben dargestellt ist. In Wirklichkeit handelt es sich nach einiger Betriebsdauer um einen durch das Aufschaukeln der Temperatur zustande kommende Änderung des Radius R um höchstens einige Hundertstel. Ein solcher Schlag reicht aber schon aus, um einen ordnungsgemäßen Betrieb einer Ultraschall-Verfestigungsanlage für thermoplastische Vliese zu beeinträchtigen oder gar unmöglich zu machen. Die Verfestigungswirkung ist nämlich sehr stark von der lokal eingetragenen spezifischen Energiemenge abhängig. Dies führt dazu, daß das Vlies im Rhythmus im Rapport einer Walzenumdrehung stärker verfestigt ist als in den übrigen Bereichen, was nicht akzeptabel ist.

Die Walze 10 kann ihrerseits beheizt sein oder nicht. Der geschilderte Effekt ist hiervon unabhängig und überlagert sich. Das Ziel der Erfindung ist, den Effekt zu mindern.

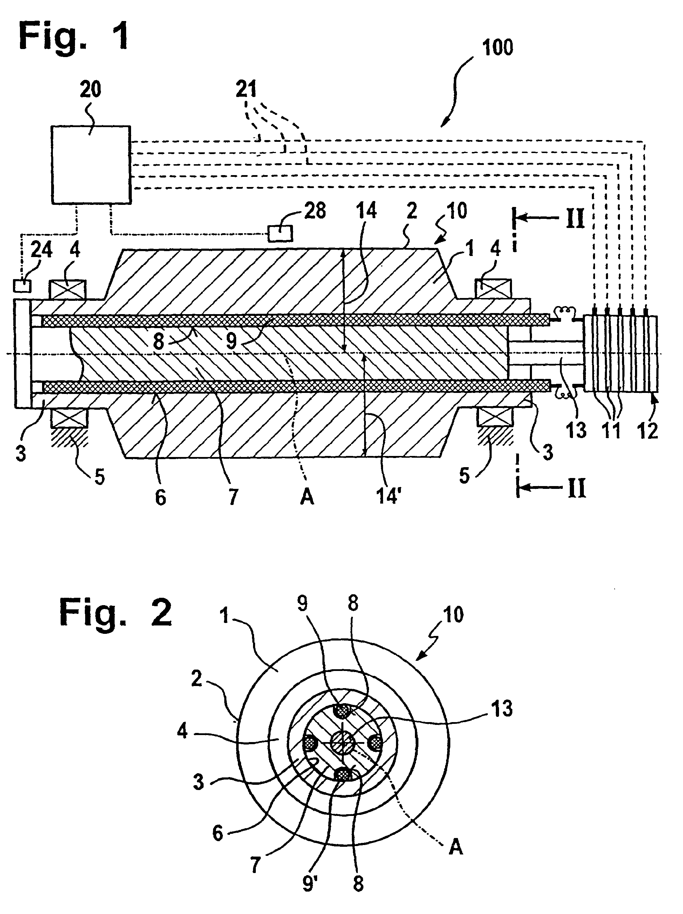

In Fig. 1 ist eine als Ganzes mit 100 bezeichnete Walzenvorrichtung für eine Ultraschall-Verfestigungsanlage für thermoplastische Vliese mehr im einzelnen dargestellt. Sie umfaßt die Walze 10 mit dem Walzenkörper 1 mit einer zylindrischen, den arbeitenden Walzenumfang 2 bildenden Umfangsfläche, deren Breite durch die Breite der zu verarbeitenden Warenbahn bestimmt ist. Der Walzenkörper 1 hat an den beiden Enden axial vorstehende Walzenzapfen 3, auf denen die Walze 10 über Lager 4 in einem nur angedeuteten Maschinengestell 5 um die Achse A, zu der der arbeitende Walzenumfang 2 koaxial ist, drehbar gelagert ist. Die Walze 10 bildet die mit der Gravur versehene Gegenwalze der Ultraschall-Verfestigungsanlage.

Bei der Herstellung der Walze 10 wurde die von der Bearbeitungstechnik her größtmögliche Genauigkeit angestrebt. Ein gewisser verbleibender "Schlag" ist aber unvermeidlich und schaukelt sich aus den vorstehend beschriebenen Gründen noch auf, weil auf der sich der Sonotrode am meisten annähernden Seite bevorzugt Wärme eingetragen und die Walze einseitig erwärmt wird, was sich in einer Durchbiegung des Walzenkörpers 1 in einer durch seine Achse A gehenden Ebene äußert. In solchen Fällen ist es erforderlich, zusätzliche Maßnahmen zur Verbesserung der Rundlaufgenauigkeit zu treffen, z.B. wenn die Walze 10 als mit der Gravur versehene Gegenwalze in der besagten Ultraschall-Verfestigungsanlage eingesetzt wird.

Der Walze 10 ist eine Einrichtung zur Bestimmung der Lage des "Schlages" in Umfangsrichtung zugeordnet. Diese Einrichtung umfaßt einen feststehend im Walzenständer angeordneten Sensor 28 zur Ermittlung der Umfangsstelle des maximalen Schlages, d.h. der maximalen Annäherung des arbeitenden Walzenumfangs 2 an den Sensor 28. Außerdem ist ein Winkelgeber 24 vorgesehen, der die Winkelstelle des Walzenkörpers 1 zu erfassen gestattet, an der der maximale, durch den Sensor 28 ermittelte Schlag vorliegt. Die Signale des Sensors 28 und des Winkelgebers 24 werden einem Steuergerät 20 zugeleitet, welches die Signale verarbeitet. Der Walzenkörper 1 weist in seinem Innern eine zu der Achse A koaxiale zylindrische durchgehende Ausnehmung 6 auf, in die ein zylindrischer, im Durchmesser passender Kern 7 eingesetzt ist, der sich im wesentlichen über die Länge der Walze 10 erstreckt. Der Kern 7 weist an seinem Außenumfang über seine Länge durchgehende achsparallele Nuten 8 auf, in denen stabförmige elektrische Heizelemente 9 angeordnet sind, die sich über die Länge der Walze 10 erstrecken und an dem in Fig. 1 rechten Ende mit den Schleifringen 11 eines als Ganzes mit 12 bezeichneten Schleifringkopfes verbunden sind. Jedes Heizelement 9 kann separat mit elektrischer Energie versorgt werden, unabhängig von den anderen noch vorhandenen Heizelementen 9. Die elektrische Energie wird von dem Steuergerät 20 über die Leitungen 21 den einzelnen Schleifringen 11 zugeführt. Der Schleifringkopf 12 sitzt auf einem aus dem in Fig. 1 rechten Ende der Walze 10 hervorstehenden Verlängerungszapfen 13 des Kerns 7.

Wenn der Sensor 28 im Verein mit dem Winkelgeber 24 festgestellt hat, daß die Walze 10 einen Schlag an der Stelle aufweist, die gemäß Fig. 1 oben liegt, so daß also der Abstand 14 des arbeitenden Walzenumfangs 2 von der Achse A dort größer ist als der entsprechende Abstand 14' auf der gegenüberliegenden Seite, sorgt das Steuergerät 20 dafür, daß das in Fig. 1 unten gelegene Heizelement 9' bevorzugt mit elektrischer Energie versorgt wird. Der radiale Bereich 14' wird dadurch bevorzugt erwärmt und erfährt eine entsprechende radiale thermische Dehnung, die dem "Schlag" an der Oberseite entgegengesetzt ist und diesen zumindest teilweise wettmacht. Die erforderlichen Temperaturunterschiede sind nicht groß, da die zu mildernden Schläge nur im um-Bereich liegen. Bei Außerachtlassung der Verformung des gesamten Walzenkörpers ergibt sich allein durch die thermische Dehnung einer Wandstärke von beispielsweise 100 mm in radialer Richtung schon ein Betrag von 1,2 µm pro Grad Temperaturänderung. Die Temperaturänderungen in Umfangsrichtung, um einen ausreichenden Gegeneffekt zu dem Schlag herbeizuführen, sind also relativ gering.

Die Zahl von vier gleichmäßig über den Umfang verteilten Heizelementen 9 ist nur ein Merkmal des Ausführungsbeispiels. Es könnten auch drei oder mehr als vier Heizelemente 9 über den Umfang verteilt vorhanden sein.

Die vier Heizelemente 9 bilden Ausgleichsmittel, die die unerwünschte Durchbiegung des Walzenkörpers ausgleichen sollen. Sie dienen in erster Linie nicht zur Beheizung des Walzenkörpers 1. Hierzu können separate, in Fig. 1 und 2 nicht dargestellte Heizeinrichtungen vorgesehen sein, die größere Wärmemengen umsetzen, als sie für den Ausgleich der unerwünschten Durchbiegung erforderlich sind.

Soweit in den nachfolgenden Ausführungsformen funktionell entsprechende Teile vorhanden sind, sind gleiche Bezugszahlen verwendet.

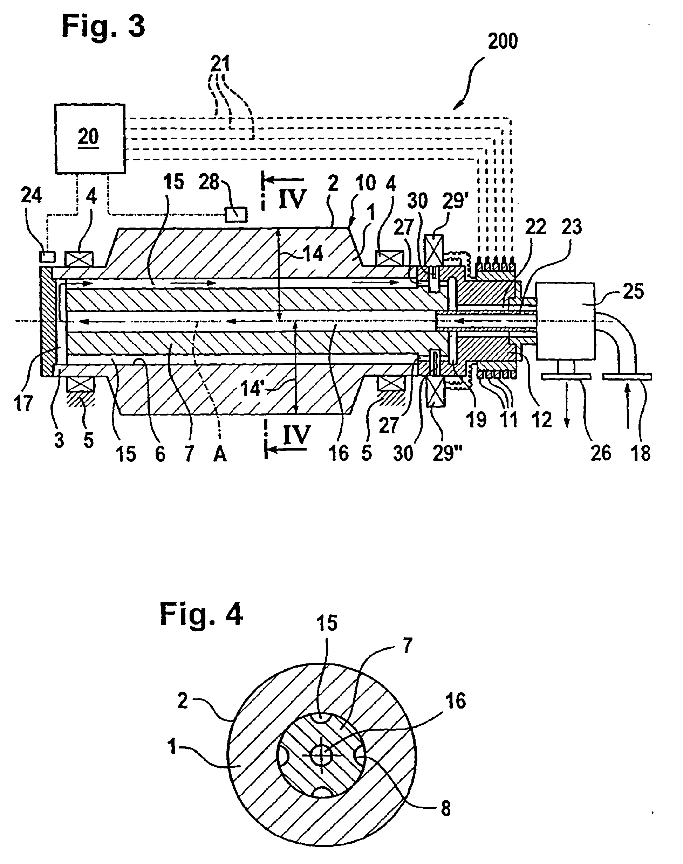

Die Walzenvorrichtung 200 der Fig. 3 unterscheidet sich dadurch von der Walzenvorrichtung 100, daß in den Nuten 8 des Kerns 7 keine elektrischen Heizelemente vorhanden sind, sondern die Nuten 8 Kanäle 15 bilden, die gegen den Innenumfang der Ausnehmung 6 offen sind und durch diesen geschlossen werden. Durch die Kanäle 15 kann ein fluides Wärmeträgermedium, zum Beispiel ein Wärmeträgeröl, in der einen Richtung längs der Achse des Walzenkörpers 1 strömen. Der Kern 7 hat außerdem noch eine zentrale Bohrung, durch die das Wärmeträgermedium in der entgegengesetzten Richtung strömen kann, zum Beispiel gemäß Fig. 3 von rechts nach links um am linken Ende des Walzenkörpers 1 auszutreten und in der dort gebildeten Überleitkammer 17 in die äußeren Kanäle 15 überzutreten. Die Strömungsrichtungen könnten natürlich auch umgekehrt verlaufen.

Bei der Walzenanordnung 200 wird das Wärmeträgeröl an dem Einlaß 18 zugeführt und tritt in den Drehanschluß 25 ein, worin es in das mitdrehende, in die zentrale Bohrung 16 eingesteckte Zuführrohr 23 und anschließend in die zentrale Bohrung 16 übergeleitet wird. An dem rechten Ende des Walzenkörpers 1 ist wiederum eine Überleitkammer 19 gebildet, in die das in den Kanälen 15 zurückkehrende Wärmeträgeröl eintritt, in der es radial nach innen umgelenkt wird, um in einen den Schleifringkopf 12 durchsetzenden, dem Zuführrohr 23 radial außen benachbarten hohlzylindrischen Kanal 22 überzutreten, der wieder in den Drehanschluß 25 zurückführt, aus dem das Wärmeträgeröl an dem feststehenden Auslaß 26 abziehbar ist.

Auf der bezüglich der Überleitkammer 19 zum arbeitenden Walzenumfang 2 hin gelegenen Seite sind in den in dem Schleifringkopf 12 ausgebildeten Anschlußkanälen 27 zu den Kanälen 15 eine Drosselwirkung erzeugende Ventile 29',29" angeordnet, die mittels radialer Schieber 30 den Strömungsquerschnitt für das in den Übergangskanälen 27 zurückströmende Wärmeträgeröl ganz oder teilweise schließen können. Die Ventile 29',29" werden über die auf dem Schleifringkörper 12 angeordneten Schleifringe11 angesteuert, und zwar in Abhängigkeit von der Lage des Schlages des Walzenkörpers 1.

Wenn ein bestimmter Kanal 15 durch das zugehörige Ventil 29',29" mehr oder weniger geschlossen wird, sinkt die durch diesen Kanal strömende Wärmeträgerölmenge ab, so daß in diesem Bereich keine Heizung bzw. Kühlung mehr stattfindet und auf diese Weise die angestrebte ungleichmäßige Beheizung, über den Umfang gesehen, zustande kommt. Das Wärmeträgeröl kann beheizt oder gekühlt sein; die Lage des zumindest teilweise zu sperrenden Kanals 15 muß entsprechend gewählt werden. Es versteht sich, daß auch alle Kanäle 15 bis auf einen geschlossen und der eine allein mit Wärmeträgeröl beaufschlagbar ist. Die Lage der gesperrten bzw. geöffneten Kanäle richtet sich danach, ob das Wärmeträgeröl beheizt oder gekühlt ist und wo - in Umfangsrichtung gesehen - der zu bekämpfende Schlag zu finden ist.

Die Kanäle 15 bzw. das darin strömende Wärmeträgeröl können in diesem Fall gleichzeitig das Temperiermittel, mittels dessen die Grundtemperatur des Walzenkörpers eingestellt wird, als auch die Ausgleichsmittel bilden, mittels deren eine unerwünschte geringfügige Durchbiegung des Walzenkörpers bekämpft werden kann. Außerdem ist festzuhalten, daß nicht notwendig oberhalb der Umgebungstemperatur liegendes Wärmeträgeröl verwendet werden muß, sondern daß auch ein kühlendes Wärmeträgermedium oder Kühlstäbe vorhanden sein können. Die der Erfindung zugrundeliegende Verstellung des Temperierens umfaßt beides.

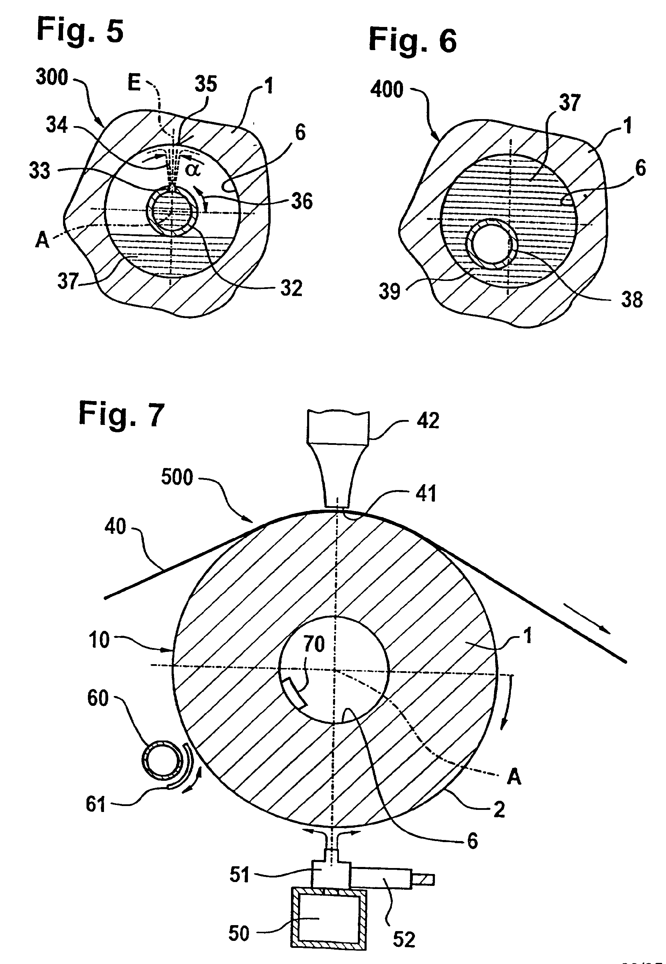

In Fig. 5 ist ein Teilquerschnitt durch eine Walzenvorrichtung 300 wiedergegeben, bei der der Walzenkörper 1 eine zentrale Ausnehmung 6 aufweist und insoweit der Walzenvorrichtung 100 der Fig. 1 und 2 entspricht, jedoch ohne Kern 7 und Heizelemente 9. Durch die Ausnehmung 6 der Walzenvorrichtung 300 führt der Länge nach ein mittiges Spritzrohr 32 hindurch, welches auf einer Seite eine achsparallele Reihe von Lochungen oder Schlitzen 33 aufweist, durch die ein messerartiger bzw. nur einen engen Umfangswinkel einnehmender Strahl 34 eines fluiden Wärmeträgermediums gegen eine Stelle 35 des Innenumfangs der Ausnehmung 6 gerichtet werden kann. Durch die Lage des Schlages und die Achse A ist eine Ebene E bestimmt, und der Strahl 34 erstreckt sich - sich nach außen öffnend - in einem Winkelbereich α - vorzugsweise symmetrisch zu beiden Seiten der Ebene E. α liegt jedenfalls deutlich unter 180°, vorzugsweise unter 30°. Das Spritzrohr 32 läuft mit dem Walzenkörper 1 um, kann aber gegenüber diesem im Sinne des Pfeiles 36 in seiner Drehstellung in Pfeilrichtung und gegebenenfalls auch in seiner Position im Querschnitt der Ausnehmung 6 justiert werden, um sich der notwendigen Lage der Auftreffstelle 35 anzupassen.

Der Walzenkörper 1 wird bevorzugt in dem Umfangsbereich der Stelle 35 erwärmt oder gekühlt (je nachdem ob das fluide Wärmeträgermedium beheizt oder gekühlt ist), wodurch einem Schlag entgegengewirkt werden kann. Das aus der Loch- oder Schlitzreihe 33 austretende fluide Wärmeträgermedium 37, welches sich in der Ausnehmung 6 zwischen dem Außenumfang des Spritzrohrs 32 und dem Innenumfang der Ausnehmung 6 ansammelt, wird fortlaufend abgezogen.

Es versteht sich, daß diese Ausführungsform nur als Ausgleichsmittel geeignet ist, weil sie keine über den Umfang gleichmäßige Erwärmung zu erzeugen in der Lage ist.

Bei der Walzenvorrichtung 400 der Fig. 6 ist die Ausnehmung 6 des Walzenkörpers 1 mit in deren Längsrichtung durchgepumptem fluiden Wärmeträgermedium 37 gefüllt. Außerhalb der Mitte der Ausnehmung 6 ist ein zu deren Achse paralleles, jedoch außerhalb der Mitte angeordneter Verdrängungskörper 38 in Gestalt eines Rohres angeordnet, welches die Wärmeübertragung auf den Innenumfang der Ausnehmung 6 dahingehend beeinflußt, daß er im Bereich der Engstelle 39 zwischen dem Innenumfang 6 und dem rohrförmigen Verdrängerkörper 38 von dem übrigen Umfang der Ausnehmung 6 abweicht. Der Verdrängungskörper läuft mit dem Walzenkörper 1 um, so daß die Engstelle immer an der gleichen Stelle des Walzenkörpers, in Umfangsrichtung gesehen, verbleibt.

Die Lage des Verdrängerkörpers 38 im Querschnitt der Ausnehmung 6 ist justierbar, um dem Schlag entgegenwirken zu können. Die durch die exzentrische Lage des Verdrängerrohrs 38 mögliche Ungleichmäßigkeit der Wärmeübertragung auf den Innenumfang der Ausnehmung 6 ist zur Herbeiführung einer ausreichenden, in Umfangsrichtung lokalisierten thermischen Ausdehnung des Walzenkörpers, die einem Schlag entgegengesetzt ist, ausreichend. Die Beheizung muß nicht mit hoher Energiekonzentration erfolgen, da, wie bereits erwähnt, die Rundlaufungenauigkeiten und die entsprechenden zu erzeugenden thermischen Dehnungen auf der gegenüberliegenden Seite nur in der Größenordnung von einigen µm liegen.

Bei der Walzenvorrichtung 500 der Fig. 7 handelt es sich um eine Ultraschall-Verfestigungsanlage, bei der ein bahnförmiges Vlies 40 aus thermoplastischen Fasern zwischen dem Umfang einer Walze 10 und der Stirnseite 41 einer radial gegen den Umfang der Walze 10 wirkenden, die Ultraschall-Energie übertragenden Sonotrode 42 hindurchgeleitet wird. Die Walze 10 trägt an ihrer eine zylidnrische Hüllfläche bildenden Umfangsfläche 2 ein bestimmtes Relief, welches das Verfestigungsmuster bestimmt.

In diesem Ausführungsbeispiel wird die Verungleichmäßigung der Temperatur, die einem Schlag entgegenwirken soll, radial von außen in dem Walzenkörper 1 erzeugt.

Es ist ein längs des Walzenkörpers sich erstreckender Kanal 50 für ein gasförmiges Wärmeträgermedium, zum Beispiel beheizte oder gekühlte Druckluft vorgesehen.

Längs des Kanals 50 sind an dessen Oberseite gegen den Außenumfang des Walzenkörpers 1 gerichtete einander benachbarte Düsen 51 aufgereiht, die durch Magnetventile 52 betätigbar sind. Wenn also der Walzenkörper 1 gemäß Fig. 7 einen Schlag nach unten aufweist, also im unteren Bereich einen vergrößerten Radius besitzt, werden die Düsen 51 sämtlich gleichzeitig geöffnet, wenn der untere Bereich des Walzenkörpers 1 an ihnen vorbeikommt. Im weiteren Umlauf des Walzenkörpers 1 werden die Düsen 51 sogleich wieder geschlossen, so daß die Wirkung des fluiden Wärmeträgermediums in dem Kanal 50 nur auf einem Teil des Umfangs des Walzenkörpers 1 zu verspüren ist.

Gesteuert wird die Öffnung und Schließung der Düsen 51 durch ein Steuergerät, welches den Steuergeräten 20 in den Fig. 1 und 3 entspricht und seine Signale von einer entsprechenden feststehenden Sensoranordnung 24,28 erhält.

Anstatt des Kanals 50 kann auch ein anderes sich stabförmig längs des Walzenkörpers 1 erstreckendes Temperierelement 60 vorgesehen sein, welches in Fig. 7 angedeutet ist und eine Alternative zu dem Kanal 50 darstellen soll. Ein solches Temperierelement hat jedoch nur dann die gewünschte Wirkung, wenn es mit einer der Drehzahl des Walzenkörpers 1 entsprechenden Frequenz aktiviert und deaktiviert werden kann. Ein von einem Wärmeträgermedium durchströmtes Rohr wäre normalerweise hierfür zu träge. Wenn das stabförmige Temperierelement 60 jedoch als induktive Elektrode ausgebildet ist, kann eine ausreichend schnelle Aktivierung und Deaktivierung und damit eine Begrenzung der Wirkung auf einen bestimmten Umfangsberiech des Walzenkörpers 1 erfolgreich sein.

Die Aktivierung und Deaktivierung könnte auch durch eine Blende 61 herbeigeführt werden, die im Rhythmus des Umlaufs der Walze 10 zwischen das Temperierelement 60 und den Walzenumfang 2 bringbar ist, etwa wie in Fig. 7 angedeutet, oder in der Form eines um das Temperierelement 60 umlaufenden längsgeschlitzten Rohrs. In einem solchen Fall kann das Temperierelement 60 auch ein von einem Wärmeträgeröl durchströmtes Rohr oder ein stabförmiges elektrisches Temperierelement sein. Eine Blende 61 kann bei außerhalb oder innerhalb der Ausnehmung 6 angeordneten Temperierelementen vorgesehen sein.

In Fig. 7 ist noch eine weitere Alternative angedeutet: am Innenumfang der Ausnehmung 6 sitzt ein elektrisches Temperierelement 70, dessen Position in Umfangsrichtung je nach der Lage des Schlages einstellbar ist und welches mit der Walze 10 umläuft.

Schließlich ist in Fig. 8 ein Ausführungsbeispiel 600 einer Ultraschall-Vliesverfestigungsanlage dargestellt, bei der die Walze 10 entsprechend Fig. 7 als Gegenwalze dient. Die Warenbahn 40 wird durch den Spalt Sp zwischen der Stirnfläche 41 der Sonotrode (bzw. der Sonotroden) 42 und der Umfangsfläche 2 der Walze hindurchgeleitet und dort der UltraschallEinwirkung ausgesetzt. Der Walzenkörper 1 enthält auf einem Teilkreis 43 eine Anzahl gleichmäßig über den Umfang verteilter peripherer Bohrungen 44, durch die ein fluides Temperiermedium in Richtung der Walzenachse hindurchleitbar ist. Bei dem Ausführungsbeispiel 600 ist das fluide Temperiermedium eine Kühlflüssigkeit, die jedoch nicht durch alle periphere Bohrungen 44 gleichzeitig, sondern nur durch die dem oberen Biegescheitel benachbarte periphere Bohrung 44' oder einige wenige dieser wiederum benachbarte periphere Bohrungen 44" hindurchgeleitet wird.

Gekühlt wird also nur auf der Längsseite, auf der sich der Walzenkörper 1 nach oben durchgebogen hat. Dadurch erfährt dieser Bereich eine thermische Kontraktion, die der Biegung entgegenwirkt.

Querschnittsbilder von Walzen entsprechend Fig. 8 sind bei temperierten Walzen bekannt, wenn die durch die peripheren Bohrungen geleitete Wärmeträgerflüssigkeit die Gesamt-Beheizung der Walze bereitstellen soll. Dann aber liegen die peripheren Bohrungen etwa in der Mitte der Wandstärke, d.h. nicht zu nahe an der Umfangsfläche 2, damit sich durch den größeren von der Wärme zurückzulegenden Abstand eine Vergleichmäßigung der Temperatur an der Umfangsfläche 2 ergibt.

Bei dem Ausführungsbeispiel 600 jedoch hat der Teilkreis 43 einen größeren Durchmesser und liegen die peripheren Bohrungen näher an dieser Umfangsfläche. Es ist ja gerade beabsichtigt, eine Ungleichmäßigkeit herbeizuführen und eine längliche Zone, deren Lage durch die Durchbiegung des Walzenkörpers 1 bestimmt ist, bevorzugt zu beaufschlagen. Deshalb liegen die peripheren Bohrungen 44 recht nahe an der Umfangsfläche, so daß die Ungleichmäßigkeit am Umfang auch noch spürbar wird.

## Patentansprüche

1. Walzenvorrichtung (100, 200, 300, 400, 500, 600) mit einer Walze (10),
mit einem zylindrischen, den arbeitenden Walzenumfang (2) bildenden Walzenkörper (1) der Walze (10), der an den Enden drehbar gelagert ist,
und mit dem Walzenkörper (1) zugeordneten, über die Länge des Walzenkörpers (1) sich erstreckenden und auf ihn wirkenden Temperiermitteln,
wobei die Temperiermittel Ausgleichsmittel umfassen, mittels derer der Walzenkörper (1) bevorzugt in einem engen Umfangswinkelbereich um eine durch die Achse (A) des Walzenkörpers (1) gehende Ebene (E) herum temperierbar ist,
**dadurch gekennzeichnet,**
**dass** die Walze (10) das Gegenwerkzeug zu einer Sonotrode (42) zur Ultraschallbehandlung von flächigem Behandlungsgut ist, das zwischen der Walze (10) und der Sonotrode (42) hindurch leitbar ist,
die Ebene (E) in der die Sonotrodenachse und die Achse (A) der Gegenwalze (10) enthaltenden Ebene gelegen ist und
die Temperiermittel zugleich die Ausgleichsmittel zur Temperierung in einem engen Umfangswinkelbereich α um die durch die Achse (A) des Walzenkörpers (1) gehende Ebene (E) sind.

2. Walzenvorrichtung nach Anspruch 1, **dadurch gekennzeichnet, dass** die Walze (10) eine - in Umfangsrichtung gesehen - einseitige Temperierung in einem Umfangswinkelbereich um eine durch die Achse (A) des Walzenkörpers (1) gehende Ebene (E) herum erfährt und die Ausgleichsmittel so ausgebildet und angeordnet sind, dass die einseitige Temperierung über die Länge der Walze (10) ausgerichtet ist.

3. Walzenvorrichtung nach Anspruch 2, **dadurch gekennzeichnet, dass** die Ebenen der einseitigen Temperierung und der Ausgleichsmittel zusammenfallen und die Temperaturwirkung der Ausgleichsmittel der einseitigen Temperierung entgegengesetzt ist.

4. Walzenvorrichtung nach einem der Ansprüche 1 bis 3, **dadurch gekennzeichnet, dass** die Ausgleichsmittel länglich-stabförmig ausgebildet und achsparallel über die Länge des Walzenkörpers (1) durchgehend und über den Umfang gleichmäßig verteilt angeordnet sind.

5. Walzenvorrichtung nach einem der Ansprüche 1 bis 4, **dadurch gekennzeichnet, dass** die Ausgleichsmittel elektrische Temperierelemente sind.

6. Walzenvorrichtung nach einem der Ansprüche 1 bis 4, **dadurch gekennzeichnet, dass** die Ausgleichsmittel von einem fluiden Wärmeträgermedium durchströmte Kanäle (15, 44) sind.

7. Walzenvorrichtung nach einem der Ansprüche 1 bis 6, **dadurch gekennzeichnet, dass** der Walzenkörper (1) im Innern zumindest über einen wesentlichen Teil der Länge des arbeitenden Walzenumfangs (2) eine zur Walzenachse (A) koaxiale zylindrische Ausnehmung (6) aufweist und die Ausgleichsmittel im Innern der Ausnehmung (6) angeordnet sind.

8. Walzenvorrichtung nach Anspruch 7, **dadurch gekennzeichnet, dass** die Ausgleichsmittel im Innern der Ausnehmung (6) mitumlaufend ausgebildet sind.

9. Walzenvorrichtung nach Anspruch 7, **dadurch gekennzeichnet, dass** die Ausgleichsmittel im Innern der Ausnehmung (6) undrehbar angeordnet und im Rhythmus des Umlaufs des Walzenkörpers (1) aktivierbar und deaktivierbar sind.

10. Walzenvorrichtung nach einem der Ansprüche 7 oder 8, **dadurch gekennzeichnet, dass** am Umfang der Ausnehmung (6) mehrere stabförmige, achsparallele, über den Umfang verteilte, mitumlaufende, separat ansteuerbare Temperierelemente (9) vorgesehen sind und der Walze (10) eine Einrichtung (24, 28) zur Bestimmung der Winkellage eines Rundlauffehlers zugeordnet und mit einer Steuereinrichtung (20) derart wirkungsverbunden ist, dass durch separate Ansteuerung nach der Lage des Rundlauffehlers ausgewählter Temperierelemente (9) dem Rundlauffehler entgegenwirkbar ist.

11. Walzenvorrichtung nach Anspruch 10, **dadurch gekennzeichnet, dass** in der Ausnehmung (6) der Walze (10) ein diese im wesentlichen ausfüllender, mitumlaufender zylindrischer Kern (7) angeordnet ist, der an seinem Außenumfang achsparallele Nuten (8) für die Temperierelemente (9) aufweist.

12. Walzenvorrichtung nach einem der Ansprüche 5 bis 10, **dadurch gekennzeichnet, dass** mit dem Walzenkörper (1) ein Schleifringsatz (12) drehverbunden ist, mittels dessen den einzelnen Temperierelementen (9) jeweils separat elektrische Energie zuführbar ist.

13. Walzenvorrichtung nach Anspruch 12, **dadurch gekennzeichnet, dass** mittels der elektrischen Energie die elektrischen Temperierelemente (9) direkt beaufschlagbar sind.

14. Walzenvorrichtung nach Anspruch 12, **dadurch gekennzeichnet, dass** mittels der elektrischen Energie den Kanälen (15) zugeordnete Drosseleinrichtungen (29', 29", 30) betätigbar sind.

15. Walzenvorrichtung nach einem der Ansprüche 7 bis 14, **dadurch gekennzeichnet, dass** die Ausnehmung (6) von einem das Temperiermittel bildenden Wärmeträgermedium durchströmt und die Strömung über den Querschnitt der Ausnehmung (6) einseitig verungleichmäßigt ist.

16. Walzenvorrichtung nach Anspruch 15, **dadurch gekennzeichnet, dass** in der Ausnehmung (6) ein stabförmiger, zu der Achse der Ausnehmung (6) paralleler Verdrängungskörper (38) angeordnet ist, der im Querschnitt der Ausnehmung (6) in Umfangsrichtung und gegebenenfalls aus der Mitte der Ausnehmung (6) heraus zu sich selbst verlagerbar ist.

17. Walzenvorrichtung nach Anspruch 16, **dadurch gekennzeichnet, dass** der stabförmige Verdrängungskörper (38) an seinen beiden Enden in hinsichtlich Winkellage und gegebenenfalls Exzentrizität einstellbaren umlaufenden Exzenteranordnungen geführt ist.

18. Walzenvorrichtung nach einem der Ansprüche 1 bis 8, **dadurch gekennzeichnet, dass** die stabförmigen Temperierelemente durch ein von einem fluiden Wärmeträgermedium durchströmtes, zur Achse (A) paralleles Spritzrohr (32, 50) mit einer einseitigen, linearen, sich längs des Spritzrohrs (32) erstreckenden Austrittszone (33) gebildet sind, durch die Wärmeträgermedium in wesentlichen in einer durch die Achse (A) gehenden Ebene (E) aus dem Innern des Spritzrohrs (32) bzw. in einem zu beiden Seiten der Ebene (E) gelegenen engen Winkelbereich (α) gegen den Innenumfang der Ausnehmung (6) bzw. den Außenumfang (2) des Walzenkörpers (1) ausspritzbar ist.

19. Walzenvorrichtung nach Anspruch 18, **dadurch gekennzeichnet, dass** die Austrittszone (33) durch eine Loch-, Düsen- oder Schlitzreihe gebildet ist.

20. Walzenvorrichtung nach Anspruch 18 oder 19, **dadurch gekennzeichnet, dass** das Spritzrohr (32), wenn es in der Ausnehmung (6) angeordnet ist, dort um seine Achse drehbar abgestützt ist.

21. Walzenvorrichtung nach einem der Ansprüche 4 bis 20, **dadurch gekennzeichnet, dass** eine sich im wesentlichen über die Länge des Walzenkörpers (1) erstreckende, im Rhythmus des Umlaufs des Walzenkörpers (1) zwischen das Temperierglied (60) und den Walzenumfang (2) bringbare Blende (61) vorgesehen ist, mittels derer die Einwirkung des Temperierelements (60) auf die Walze aktivierbar und deaktivierbar ist.

22. Walzenvorrichtung nach einem der Ansprüche 4 bis 21, **dadurch gekennzeichnet, dass** die Ausgleichsmittel außerhalb des Umfangs (2) des Walzenkörpers (1) diesem benachbart angeordnet und im Rhythmus des Umlaufs der Walze (10) aktivierbar und deaktivierbar sind.

23. Walzenvorrichtung nach Anspruch 22, **dadurch gekennzeichnet, dass** sie mindestens ein feststehendes längliches achsparalleles sich im wesentlichen über die Länge des Walzenkörpers (1) erstreckendes Temperierelement (50, 60) umfasst.

## Claims

1. Roller device (100, 200, 300, 400, 500, 600), with a roller (10), with a cylindrical roller body (1) of the roller (10), the said roller body forming the working roller circumference (2) and being mounted rotatably at the ends, and with thermal control means which are assigned to the roller body (1), extending over the length of the roller body (1) and acting on the latter, the thermal control means comprising compensating means, by which the roller body (1) can be thermally controlled preferably in a narrow circumferential angle sector around a plane (E) passing through the axis (A) of the roller body (1), **characterized in that** the roller (10) is the countertool to a sonotrode (42) for the ultrasonic treatment of sheet-like treatment material which can be conducted through between the roller (10) and the sonotrode (42), the plane (E) is located in the plane containing the sonotrode axis and the axis (A) of the counterroller (10), and the thermal control means are at the same time the compensating means for thermal control in a narrow circumferential angle sector α around the plane (E) passing through the axis (A) of the roller body (1).

2. Roller device according to Claim 1, **characterized in that** the roller (10) undergoes one-sided thermal control, as seen in the circumferential direction, in a circumferential angle sector around a plane (E) passing through the axis (A) of the roller body (1), and the compensating means are designed and arranged such that the one-sided thermal control is oriented over the length of the roller (10).

3. Roller device according to Claim 2, **characterized in that** the planes of the one-sided thermal control and of the compensating means coincide, and the thermal action of the compensating means is opposite to the one-sided thermal control.

4. Roller device according to one of Claims 1 to 3, **characterized in that** the compensating means are designed in the form of an elongate bar and are arranged continuously, axially parallel, over the length of the roller body (1) and so as to be distributed uniformly over the circumference.

5. Roller device according to one of Claims 1 to 4, **characterized in that** the compensating means are electrical thermal control elements.

6. Roller device according to one of Claims 1 to 4, **characterized in that** the compensating means are ducts (15, 44) through which a fluid heat transfer medium flows.

7. Roller device according to one of Claims 1 to 6, **characterized in that** the roller body (1) has inside it, at least over a substantial part of the length of the working roller circumference (2), a cylindrical recess (6) coaxial with respect to the roller axis (A), and the compensating means are arranged inside the recess (6).

8. Roller device according to Claim 7, **characterized in that** the compensating means are designed to co-rotate inside the recess (6).

9. Roller device according to Claim 7, **characterized in that** the compensating means are arranged non-rotatably inside the recess (6) and are activatable and deactivatable in rhythm with the rotation of the roller body (1).

10. Roller device according to either one of Claims 7 and 8, **characterized in that** a plurality of bar-shaped, axially parallel, co-rotating and separately activatable thermal control elements (9) distributed over the circumference are provided on the circumference of the recess (6), and a device (24, 28) for determining the angular position of a true-running error is assigned to the roller (10) and is operatively connected to a control device (20) in such a way that the true-running error can be counteracted by means of separate activation of thermal control elements (9) selected according to the position of the true-running error.

11. Roller device according to Claim 10, **characterized in that** the recess (6) of the roller (10) has arranged in it a co-rotating cylindrical core (7) which essentially fills the said recess and which on its outer circumference has axially parallel grooves (8) for the thermal control elements (9).

12. Roller device according to one of Claims 5 to 10, **characterized in that** the roller body (1) has connected rotationally to it a slip-ring set (12), by means of which electrical energy can in each case be supplied separately to the individual thermal control elements (9).

13. Roller device according to Claim 12, **characterized in that** the electrical thermal control elements (9) can be acted upon directly by means of the electrical energy.

14. Roller device according to Claim 12, **characterized in that** throttle devices (29', 29'', 30) assigned to the ducts (15) can be actuated by means of the electrical energy.

15. Roller device according to one of Claims 7 to 14, **characterized in that** a heat transfer medium forming the thermal control means flows through the recess (6), and the flow is unequalized on one side over the cross section of the recess (6).

16. Roller device according to Claim 15, **characterized in that** the recess (6) has arranged in it a bar-shaped displacement body (38) which is parallel to the axis of the recess (6) and which can be shifted in the circumferential direction in the cross section of the recess (6) and, if appropriate, out of the middle of the recess (6) towards itself.

17. Roller device according to Claim 16, **characterized in that** the bar-shaped displacement body (38) is guided at its two ends in rotating eccentric arrangements adjustable in terms of angular position and, if appropriate, of eccentricity.

18. Roller device according to one of Claims 1 to 8, **characterized in that** the bar-shaped thermal control elements are formed by an injection tube (32, 50), through which a fluid heat transfer medium flows and which is parallel to the axis (A) and has a one-sided linear outlet zone (33) extending along the injection tube (32) and through which heat transfer medium can be ejected, essentially in a plane (E) passing through the axis (A), out of the inside of the injection tube (32), or in a narrow angle sector (α) located on both sides of the plane (E), against the inner circumference of the recess (6) or the outer circumference (2) of the roller body (1).

19. Roller device according to Claim 18, **characterized in that** the outlet zone (33) is formed by a row of holes, of nozzles or of slits.

20. Roller device according to Claim 18 or 19, **characterized in that** the injection tube (32), when it is arranged in the recess (6), is supported there rotatably about its axis.

21. Roller device according to one of Claims 4 to 20, **characterized in that** a screen (61) is provided, which extends essentially over the length of the roller body (1) and can be introduced between the thermal control member (60) and the roller circumference (2) in rhythm with the rotation of the roller body (1) and by means of which the action of the thermal control element (60) on the roller can be activated and deactivated.

22. Roller device according to one of Claims 4 to 21, **characterized in that** the compensating means are arranged outside the circumference (2) of the roller body (1) adjacently to the latter and are activatable and deactivatable in rhythm with the rotation of the roller (10).

23. Roller device according to Claim 22, **characterized in that** it comprises at least one stationary, elongate and axially parallel thermal control element (50, 60) extending essentially over the length of the roller body (1).

## Revendications

1. Dispositif à rouleau (100, 200, 300, 400, 500, 600) comportant un rouleau (10) ayant un corps de rouleau (1) qui en forme la circonférence de travail (2), le corps de rouleau étant monté en rotation au niveau de ses extrémités et comportant des moyens de thermorégulation associés au corps de rouleau (1) qui se prolongent sur sa longueur et agissent sur celui-ci, les moyens de thermorégulation comprenant des moyens de compensation qui permettent de réguler la température du corps de rouleau (1) de préférence dans une zone circonférentielle angulaire étroite autour d'un plan (E) passant par l'axe (A) du corps de rouleau (1),
**caractérisé en ce que**
le rouleau (10) constitue le contre-outil par rapport à une sonotrode (42) pour le traitement par ultrasons d'articles plats, le contre-outil étant dirigeable entre le rouleau (10) et la sonotrode (42),
le plan (E) est situé dans le plan contenant l'axe de la sonotrode et l'axe (A) du contre-rouleau (10), et
les moyens de thermorégulation constituent simultanément les moyens de compensation pour la thermorégulation dans une zone circonférentielle angulaire étroite (α) située autour du plan (E) passant par l'axe (A) du corps de rouleau (1).

2. Dispositif à rouleau selon la revendication 1,
**caractérisé en ce que**
le rouleau (10) subit une thermorégulation unilatérale, vu dans la direction de la circonférence, dans une zone circonférentielle angulaire située autour d'un plan (E) passant par l'axe (A) du corps de rouleau (1) et les moyens de compensation sont conçus et disposés de telle manière que la thermorégulation unilatérale est dirigée sur la longueur du rouleau (10).

3. Dispositif à rouleau selon la revendication 2,
**caractérisé en ce que**
les plans de la thermorégulation unilatérale et des moyens de compensation coïncident et l'effet de thermorégulation des moyens de compensation est opposé à la thermorégulation unilatérale.

4. Dispositif à rouleau selon l'une des revendications 1 à 3,
**caractérisé en ce que**
les moyens de compensation sont de conception longue en forme de tige et sont agencés de manière continue, parallèles à l'axe du rouleau sur la longueur du corps de rouleau (1) en étant répartis uniformément sur sa circonférence.

5. Dispositif à rouleau selon l'une des revendications 1 à 4,
**caractérisé en ce que**
les moyens de compensation sont des éléments de thermorégulation électriques.

6. Dispositif à rouleau selon l'une des revendications 1 à 4,
**caractérisé en ce que**
les moyens de compensation sont des canaux (15, 44) traversés par un liquide caloporteur.

7. Dispositif à rouleau selon l'une des revendications 1 à 6,
**caractérisé en ce que**
l'intérieur du corps de rouleau (1) présente, au moins sur une partie substantielle de la circonférence de travail (2) du rouleau, un évidement (6) cylindrique coaxial à l'axe (A) du rouleau et les moyens de compensation sont disposés à l'intérieur de l'évidement (6).

8. Dispositif à rouleau selon la revendication 7,
**caractérisé par**
des moyens de compensation rotatifs à l'intérieur de l'évidement (6).

9. Dispositif à rouleau selon la revendication 7,
**caractérisé en ce que**
les moyens de compensation sont agencés de manière à ne pas pouvoir tourner à l'intérieur de l'évidement (6) et sont activables et désactivables au rythme de la rotation du corps de rouleau (1).

10. Dispositif à rouleau selon l'une des revendications 7 ou 8,
**caractérisé en ce que**
sur la circonférence de l'évidement (6), plusieurs éléments de thermorégulation (9) en forme de tige sont parallèles à l'axe du rouleau et répartis sur la circonférence de l'évidement, ils sont solidaires en rotation et séparément commandables et un dispositif (24, 28) de détermination de la position angulaire d'une erreur de concentricité est associé au rouleau (10) et est relié en coopération avec un dispositif de commande (20) pour contrer l'erreur de concentricité grâce à la commande séparée des éléments de thermorégulations (9) choisis selon la position de l'erreur de concentricité.

11. Dispositif à rouleau selon la revendication 10,
**caractérisé en ce que**
dans l'évidement (6) du rouleau (10), un noyau (7) cylindrique, solidaire en rotation, remplit sensiblement celui-ci et présente sur sa circonférence extérieure des rainures (8) parallèles à l'axe du rouleau destinées aux éléments de thermorégulation (9).

12. Dispositif à rouleau selon l'une des revendications 5 à 10,
**caractérisé par**
un jeu de bagues collectrices (12), solidaire en rotation du corps de rouleau (1), qui permet d'apporter de l'énergie électrique de manière séparée pour chacun des éléments de thermorégulation (9).

13. Dispositif à rouleau selon la revendication 12,
**caractérisé en ce que**
les éléments de thermorégulation (9) électriques peuvent être sollicités directement électriquement.

14. Dispositif à rouleau selon la revendication 12,
**caractérisé par**
des dispositifs de restriction (29', 29", 30) associés aux canaux (15) et actionnables électriquement.

15. Dispositif à rouleau selon l'une des revendications 7 à 14,
**caractérisé en ce que**
l'évidement (6) est traversé par un liquide caloporteur formant le liquide de thermorégulation dont le flux est rendu irrégulier unilatéralement sur la section transversale de l'évidement (6).

16. Dispositif à rouleau selon la revendication 15,
**caractérisé en ce que**
dans l'évidement (6) un corps de déplacement (38) en forme de tige parallèle à l'axe de l'évidement (6) se déplace, dans la section transversale de l'évidement (6), en direction de la circonférence et éventuellement depuis le milieu de l'évidement (6).

17. Dispositif à rouleau selon la revendication 16,
**caractérisé en ce que**
le corps de déplacement (38) en forme de tige est guidé, à ses deux extrémités, dans des dispositifs excentriques rotatifs réglables quant à la position angulaire et, le cas échéant, à l'excentricité.

18. Dispositif à rouleau selon l'une des revendications 1 à 8,
**caractérisé en ce que**
les éléments de thermorégulation en forme de tige sont constitués par un tuyau de pulvérisation (32, 50) parallèle à l'axe (A) traversé d'un liquide caloporteur et présentant une zone de sortie (33) unilatérale linéaire qui se prolonge sur la longueur du tuyau de pulvérisation (32) et grâce à laquelle le liquide caloporteur est projeté, essentiellement dans une zone circonférentielle angulaire étroite (α) située dans un plan (E) traversant l'axe (A) depuis l'intérieur du tuyau de pulvérisation (32) ou dans un plan (E) situé des deux côtés, contre la circonférence intérieure de l'évidement (6) ou la circonférence extérieure (2) du corps de rouleau (1).

19. Dispositif à rouleau selon la revendication 18,
**caractérisé en ce que**
la zone de sortie (33) est formée par une série d'orifices, de buses ou de fentes.

20. Dispositif à rouleau selon l'une des revendications 18 ou 19,
**caractérisé en ce que**
le tuyau de pulvérisation (32), lorsqu'il est agencé dans l'évidement (6), y est supporté en rotation autour de son axe.

21. Dispositif à rouleau selon l'une des revendications 4 à 20,
**caractérisé en ce qu'**
un cache (61) s'étend essentiellement sur la longueur du corps de rouleau (1) et est susceptible d'être placé, au rythme de la rotation du corps de rouleau (1), entre l'organe de thermorégulation (60) et la circonférence du rouleau (2), il permet d'activer ou de désactiver l'effet de l'élément de thermorégulation (60) sur le rouleau.

22. Dispositif à rouleau selon l'une des revendications 4 à 21,
**caractérisé en ce que**
les moyens de compensation agencés à l'extérieur de la circonférence (2) du corps de rouleau (1) à proximité de celle-ci sont activables et désactivables au rythme de la rotation du rouleau (10).

23. Dispositif à rouleau selon la revendication 22,
**caractérisé en ce qu'**
il comprend au moins un élément de thermorégulation (50, 60) long et fixe, parallèle à l'axe du rouleau, et prolongé sensiblement sur la longueur du corps de rouleau (1).
